# EUROPÄISCHE PATENTSCHRIFT

(11) **EP 4 327 121 B1**
(45) Veröffentlichungstag und Bekanntmachung des Hinweises auf die Patenterteilung: **04.11.2026**
(21) Anmeldenummer: 22723651.0
(22) Anmeldetag: 20.04.2022
(51) Int. Cl.: G01S 7/481, G01S 17/42, G01S 17/931

(54) **SIGNALUMLENKEINRICHTUNG ZUR UMLENKUNG VON ELEKTROMAGNETISCHEN SIGNALSTRAHLEN EINER DETEKTIONSVORRICHTUNG, DETEKTIONSVORRICHTUNG, FAHRZEUG MIT WENIGSTENS EINER DETEKTIONSVORRICHTUNG UND VERFAHREN ZUM BETREIBEN EINER SIGNALUMLENKEINRICHTUNG**
SIGNAL DEFLECTING DEVICE FOR DEFLECTING ELECTROMAGNETIC SIGNAL BEAMS OF A DETECTION APPARATUS, DETECTION APPARATUS, VEHICLE HAVING AT LEAST ONE DETECTION APPARATUS AND METHOD FOR OPERATING A SIGNAL DEFLECTING DEVICE
DISPOSITIF DE DÉVIATION DE SIGNAL POUR DÉVIER DES FAISCEAUX DE SIGNAUX ÉLECTROMAGNÉTIQUES D'UN APPAREIL DE DÉTECTION, APPAREIL DE DÉTECTION, VÉHICULE COMPRENANT AU MOINS UN APPAREIL DE DÉTECTION ET PROCÉDÉ POUR FAIRE FONCTIONNER UN DISPOSITIF DE DÉVIATION DE SIGNAL

(30) Priorität: 22.04.2021 DE 102021110289
(43) Veröffentlichungstag der Anmeldung: 28.02.2024
(73) Patentinhaber: Valeo Schalter und Sensoren GmbH, 74321 Bietigheim-Bissingen (DE)
(72) Erfinder: SIMON, Jan Christoph, 74321 Bietigheim-Bissingen (DE); BERTSCHINGER, Bernd, 74321 Bietigheim-Bissingen (DE)
(74) Vertreter: Pothmann, Karsten
(86) Internationale Anmeldenummer: PCT/EP2022/060387
(87) Internationale Veröffentlichungsnummer: WO 2022/223597

(56) Entgegenhaltungen:
- DE-A1- 102019 213 824
- DE-C2- 4 115 747
- GB-A- 1 363 263

## Beschreibung

### Technisches Gebiet

Die Erfindung betrifft eine Signalumlenkeinrichtung gemäß Anspruch 1 zur Umlenkung von elektromagnetischen Signalstrahlen einer Detektionsvorrichtung zur Abtastung wenigstens eines Überwachungsbereichs mittels elektromagnetischen Signalstrahlen,
mit wenigstens einer Umlenkeinheit, welche wenigstens ein bezüglich seiner Umlenkwirkung auf elektromagnetische Signalstrahlen veränderbares Umlenkelement und wenigstens einen Aktor zum Verändern des wenigstens einen Umlenkelements bezüglich seiner Umlenkwirkung aufweist.

Ferner betrifft die Erfindung eine Detektionsvorrichtung zur Überwachung wenigstens eines Überwachungsbereichs mittels elektromagnetischer Signalstrahlen,
mit wenigstens einer Sendeeinrichtung zur Erzeugung von elektromagnetischen Signalstrahlen,
mit wenigstens einer Empfangseinrichtung zum Empfangen von elektromagnetischen Signalstrahlen und zur Umwandlung von empfangenen elektromagnetischen Signalstrahlen in elektrische Empfangssignale,
wenigstens einer Signalumlenkeinrichtung zur Umlenkung von elektromagnetischen Signalstrahlen zur Abtastung wenigstens eines Überwachungsbereichs
und wenigstens einer Steuereinrichtung zur Steuerung der Detektionsvorrichtung,
wobei wenigstens eine Signalumlenkeinrichtung wenigstens eine Umlenkeinheit umfasst, welche wenigstens ein bezüglich seiner Umlenkwirkung auf elektromagnetische Signalstrahlen veränderbares Umlenkelement und wenigstens einen Aktor zum Verändern des wenigstens einen Umlenkelements bezüglich seiner Umlenkwirkung aufweist.

Außerdem betrifft die Erfindung ein Fahrzeug mit wenigstens einer Detektionsvorrichtung zur Überwachung wenigstens eines Überwachungsbereichs mittels elektromagnetischer Signalstrahlen,
mit wenigstens einer Sendeeinrichtung zur Erzeugung von elektromagnetischen Signalstrahlen,
mit wenigstens einer Empfangseinrichtung zum Empfangen von elektromagnetischen Signalstrahlen und zur Umwandlung von empfangenen elektromagnetischen Signalstrahlen in elektrische Empfangssignale,
wenigstens einer Signalumlenkeinrichtung zur Umlenkung von elektromagnetischen Signalstrahlen zur Abtastung wenigstens eines Überwachungsbereichs
und wenigstens einer Steuereinrichtung zur Steuerung der Detektionsvorrichtung,
wobei wenigstens eine Signalumlenkeinrichtung wenigstens eine Umlenkeinheit umfasst, welche wenigstens ein bezüglich seiner Umlenkwirkung auf elektromagnetische Signalstrahlen veränderbares Umlenkelement und wenigstens einen Aktor zum Verändern des wenigstens einen Umlenkelements bezüglich seiner Umlenkwirkung aufweist.

Des Weiteren betrifft die Erfindung ein Verfahren gemäß Anspruch 14 zum Betreiben einer Signalumlenkeinrichtung zur Umlenkung von elektromagnetischen Signalstrahlen einer Detektionsvorrichtung zur Überwachung wenigstens eines Überwachungsbereichs mittels elektromagnetischer Signalstrahlen, bei dem mit wenigstens einem Aktor wenigstens ein Umlenkelement bezüglich seiner Umlenkwirkung auf elektromagnetische Signalstrahlen zur Abtastung des wenigstens einen Überwachungsbereichs verändert wird.

### Stand der Technik

Aus der JP 2007 316016 A ist ein Radargerät bekannt. Das Radargerät strahlt eine Welle in einen Raum und empfängt eine Welle, die von einem reflektierenden Objekt, das in dem Raum vorhanden ist, reflektiert wird, wodurch ein Referenzzeitsignal in dem Radargerät gemessen wird, das Daten in Bezug auf das reflektierende Objekt misst. Das Radargerät umfasst Sendemittel zum Erzeugen einer pulsmodulierten Welle, ein Strahlungsmittel zum Formen der erzeugten Welle in einen Sendestrahl und zum Strahlen in den Raum und Strahlabtastmittel zum Ablenken des Strahls. Eine Strahlabtasteinheit wird mit einem Strahlsteuersignal versorgt, das eine vorbestimmte Strahlabtastgeschwindigkeit und eine Abtastrichtung von einer Steuereinheit anweist. In Übereinstimmung mit diesen Anweisungen führt die Strahlabtasteinheit eine Abtastung durch, um die Richtungen des von einer Strahlungseinheit gebildeten Sendestrahls und eines von einem Empfangsstrahlbildungseinheit gebildeten Empfangsstrahls zu ändern. Zur Änderung der Strahlrichtung ist die Strahlabtasteinheit zum Beispiel mit einem reflektierenden Spiegel versehen, und die Strahlrichtung kann durch mechanisches Ändern der Richtung der reflektierenden Spiegeloberfläche geändert werden.

DE 10 2019 213824 A1 und DE 41 15 747 C2 offenbaren jeweils gattungsgemäße Signalumlenkeinrichtungen gemäß dem Stand der Technik.

Der Erfindung liegt die Aufgabe zugrunde, eine Signalumlenkeinrichtung, eine Detektionsvorrichtung ein Fahrzeug und ein Verfahren der eingangs genannten Art zu gestalten, bei denen eine Auflösung bei der Abtastung des wenigstens einen Überwachungsbereichs mit elektromagnetischen Signalstrahlen verbessert werden kann.

### Offenbarung der Erfindung

Die Aufgabe wird bei der Signalumlenkeinrichtung dadurch gelöst, dass wenigstens zwei Umlenkeinheiten, welche unterschiedliche Umlenkwirkungen aufweisen, hintereinander in einem Signalpfad der umzulenkenden elektromagnetischen Signalstrahlen angeordnet sind,
wobei wenigstens eine verschiebende Umlenkeinheit eine verschiebende Umlenkwirkung auf umzulenkende elektromagnetische Signalstrahlen und wenigstens eine richtungsändernde Umlenkeinheit eine richtungsändernde Umlenkwirkung auf umzulenkende elektromagnetische Signalstrahlen aufweist.

Erfindungsgemäß sind wenigstens zwei Umlenkeinheiten mit unterschiedlichen Umlenkwirkungen auf umzulenkende elektromagnetische Signalstrahlen hintereinander angeordnet. Mit wenigstens einer verschiebenden Umlenkeinheit werden die umzulenkenden Signalstrahlen verschoben. Mit wenigstens einer richtungsändernden Umlenkeinheit werden die Ausbreitungsrichtungen der umzulenkenden Signalstrahlen verändert, insbesondere werden die umzulenkenden Signalstrahlen gekippt oder geschwenkt.

Mit einer verschiebenden Umlenkeinheit wird erreicht, dass die umzulenkenden elektromagnetischen Signalstrahlen innerhalb eines Strahlverlaufsfeldes unter Beibehaltung ihrer Ausbreitungsrichtung verschoben werden. Dabei ist der Querschnitt des Strahlverlaufsfeldes der Signalstrahlen durch den Querschnitt des Bereichs am Ausgang des wenigstens einen Umlenkelements vorgegeben, innerhalb dem die verschobenen Signalstrahlen das Umlenkelement verlassen. Der Querschnitt des Strahlverlaufsfeldes verläuft quer zur Ausbreitungsrichtung der Signalstrahlen. Insbesondere im Falle einer Parallelverschiebung der Signalstrahlen sind die Abmessungen des Strahlverlaufsfeldes unabhängig von dem Abstand zu dem wenigstens einen Umlenkelement. Auf diese Weise kann eine weitere Umlenkeinheit, insbesondere richtungsändernde Umlenkeinheit, in variablem Abstand hinter der wenigstens einen verschiebenden Umlenkeinheit angeordnet werden, wobei der Querschnitt des Strahlverlaufsfeldes auf der Eingangsseite der weiteren Umlenkeinheit über die Abstände zu der vorherigen verschiebenden Umlenkeinheit konstant ist. Verschiebende Umlenkeinheiten eignen sich für Feineinstellungen bei der Umlenkung der Signalstrahlen.

Das Strahlverlaufsfeld im Sinne der Erfindung ist ein gedachtes dreidimensionales Feld hinter einer Umlenkeinheit, insbesondere einer verschiebenden und/oder richtungsändernden Umlenkeinheit, innerhalb dem die Signalstrahlen nach der entsprechenden Umlenkung verlaufen. Das Strahlverlaufsfeld wird durch die entsprechende Umlenkung mit der jeweiligen Umlenkeinheit mit den Signalstrahlen abgetastet. Das Strahlverlaufsfeld hinter der letzten Umlenkeinheit der Signalumlenkeinrichtung auf der Senderseite entspricht dem Überwachungsbereich der Detektionsvorrichtung.

Mit einer richtungsändernden Umlenkeinheit kann das Strahlverlaufsfeld für die umzulenkenden Signalstrahlen aufgeweitet werden. Der Querschnitt des Strahlverlaufsfeldes quer zur Ausbreitungsrichtung der Signalstrahlen ist dabei abhängig von dem Abstand von der richtungsändernden Umlenkeinheit. So können Strahlverlaufsfelder realisiert werden, deren Querschnitte in entsprechendem Abstand deutlich größer sind als die Ausdehnung des entsprechenden Umlenkelements der richtungsändernden Umlenkeinheit quer zur Ausbreitungsrichtung der Signalstrahlen. Richtungsändernde Umlenkeinheiten eignen sich für Grobeinstellungen bei der Umlenkung der Signalstrahlen.

Durch die erfindungsgemäße Kombination wenigstens einer verschiebenden Umlenkeinheit mit wenigstens einer richtungsändernden Umlenkeinheit kann eine Feineinstellung und eine Grobeinstellung kombiniert werden. Auf diese Weise kann insgesamt die Auflösung bei der Abtastung wenigstens eines Überwachungsbereichs mit elektromagnetischen Signalstrahlen verbessert werden. So kann mit der Detektionsvorrichtung eine detailliertere Punktwolke zu dem Überwachungsbereich ermittelt werden.

Vorteilhafterweise kann die Detektionsvorrichtung nach einem Lichtlaufzeitverfahren, insbesondere einem Lichtimpulslaufzeitverfahren, arbeiten. Nach dem Lichtimpulslaufzeitverfahren arbeitende Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden.

Vorteilhafterweise kann die Detektionsvorrichtung als scannendes System ausgestaltet sein. Dabei kann mit elektromagnetischen Signalstrahlen, insbesondere Lichtpulsen, ein Überwachungsbereich abgetastet, also abgescannt, werden. Dazu können die Ausbreitungsrichtung der Signalstrahlen über den Überwachungsbereich geschwenkt werden. Hierbei kann wenigstens eine erfindungsgemäße Signalumlenkeinrichtung zum Einsatz kommen.

Vorteilhafterweise kann die Detektionsvorrichtung als laserbasiertes Entfernungsmesssystem ausgestaltet sein. Das laserbasierte Entfernungsmesssystem kann als Lichtquelle wenigstens einen Laser, insbesondere einen Diodenlaser, aufweisen. Mit einem Laser können insbesondere gepulste Lasersignale als Signalstrahlen gesendet werden. Mit dem Laser können Signalstrahlen in für das menschliche Auge sichtbaren oder nicht sichtbaren Wellenlängenbereichen emittiert werden. Entsprechend kann wenigstens ein Empfänger der Detektionsvorrichtung einen für die Wellenlänge des ausgesendeten Lichtes ausgelegten Detektor, insbesondere einen Punktsensor, Zeilensensor oder Flächensensor, im Besonderen eine (Lawinen)fotodiode, eine Photodiodenzeile, einen CCD-Sensor, einen Active-Pixel-Sensor, insbesondere einen CMOS-Sensor oder dergleichen, aufweisen. Das laserbasierte Entfernungsmesssystem kann vorteilhafterweise ein Laserscanner sein. Mit einem Laserscanner kann ein Überwachungsbereich mit insbesondere gepulsten Laser-Signalstrahlen abgetastet werden.

Vorteilhafterweise kann die Erfindung bei Fahrzeugen, insbesondere Kraftfahrzeugen, verwendet werden. Vorteilhafterweise kann die Erfindung bei Landfahrzeugen, insbesondere Personenkraftwagen, Lastkraftwagen, Bussen, Motorrädern oder dergleichen, Luftfahrzeugen, insbesondere Drohnen, und/oder Wasserfahrzeugen verwendet werden. Die Erfindung kann auch bei Fahrzeugen eingesetzt werden, die autonom oder wenigstens teilautonom betrieben werden können. Die Erfindung ist jedoch nicht beschränkt auf Fahrzeuge. Sie kann auch im stationären Betrieb, in der Robotik und/oder bei Maschinen, insbesondere Bau- oder Transportmaschinen, wie Kränen, Baggern oder dergleichen, eingesetzt werden.

Die Detektionsvorrichtung kann vorteilhafterweise mit wenigstens einer elektronischen Steuervorrichtung eines Fahrzeugs oder einer Maschine, insbesondere einem Fahrerassistenzsystem und/oder einer Fahrwerksregelung und/oder einer Fahrer-Informationseinrichtung und/oder einem Parkassistenzsystem und/oder einer Gestenerkennung oder dergleichen, verbunden oder Teil einer solchen sein. Auf diese Weise kann wenigstens ein Teil der Funktionen des Fahrzeugs oder der Maschine autonom oder teilautonom ausgeführt werden.

Die Detektionsvorrichtung kann zur Erfassung von stehenden oder bewegten Objekten, insbesondere Fahrzeugen, Personen, Tieren, Pflanzen, Hindernissen, Fahrbahnunebenheiten, insbesondere Schlaglöchern oder Steinen, Fahrbahnbegrenzungen, Verkehrszeichen, Freiräumen, insbesondere Parklücken, Niederschlag oder dergleichen, und/oder von Bewegungen und/oder Gesten eingesetzt werden.

Bei einer vorteilhaften Ausführungsform kann wenigstens eine verschiebende Umlenkeinheit keine richtungsändernde Umlenkwirkung aufweisen. Auf diese Weise kann erreicht werden, dass ein Querschnitt eines Sichtbereichs in Ausbreitungsrichtung der Signalstrahlen hinter der wenigstens einen verschiebenden Umlenkeinheit unabhängig vom Abstand konstant ist. So kann mit der wenigstens einen verschiedenen Umlenkeinheit eine Umlenkung der Signalstrahlen noch feiner eingestellt werden.

Bei einer weiteren vorteilhaften Ausführungsform kann wenigstens eine verschiebende Umlenkeinheit wenigstens einen Strahlverschieber aufweisen oder daraus bestehen. Mit einem Strahlverschieber können elektromagnetische Signalstrahlen verschoben werden. Derartige Strahlverschieber werden im Englischsprachigen als "Beam Shifter" bezeichnet.

Vorteilhafterweise kann wenigstens ein Strahlverschieber wenigstens ein Umlenkelement, insbesondere in Form eines Fensters, aufweisen. Durch Ändern einer Position und/oder Orientierung des wenigstens einen Umlenkelements können die umzulenkenden Signalstrahlen entsprechend verschoben werden. Mit einem Fenster kann ein für Transmission der Signalstrahlen geeignetes Umlenkelement realisiert werden.

Ferner kann vorteilhafterweise wenigstens ein Strahlverschieber wenigstens einen Aktor aufweisen, mit dem das wenigstens eine Umlenkelement zum Ändern einer Verschiebung der Signalstrahlen angetrieben werden kann.

Vorteilhafterweise kann wenigstens ein Umlenkelement aus für die Signalstrahlen durchlässigem Material sein und wenigstens zwei quer zum Signalpfad der umzulenkenden elektromagnetischen Signalstrahlen verlaufende parallele Flächen aufweisen. Auf diese Weise können durch entsprechendes Schwenken, Kippen und/oder Drehen des wenigstens einen Umlenkelements umzulenkende Signalstrahlen parallel verschoben werden.

Bei einer weiteren vorteilhaften Ausführungsform kann wenigstens eine verschiebende Umlenkeinheit in einem Signalpfad der umzulenkenden elektromagnetischen Signalstrahlen vor wenigstens einer richtungsändernden Umlenkeinheit angeordnet sein. Auf diese Weise können mit der wenigstens einen verschiebenden Umlenkeinheit die Signalstrahlen zur Feineinstellung entlang eines Umlenkelements der wenigstens einen richtungsändernden Umlenkeinheit verschoben werden. Da ein Querschnitt des Strahlverlaufsfeldes der wenigstens einen verschiebenden Umlenkeinheit unabhängig vom Abstand konstant ist, kann die Justage der wenigstens zwei unterschiedlichen Umlenkeinheiten vereinfacht werden.

Vorteilhafterweise ist die Ausdehnung des Umlenkelements der wenigstens einen richtungsändernden Umlenkeinheit quer zu den Signalstrahlen wenigstens so groß wie der Querschnitt des Strahlverlaufsfeldes hinter der verschiebenden Umlenkeinheit. Auf diese Weise können die mit der wenigstens einen verschiedenen Umlenkeinheit verschobenen Signalstrahlen immer auf das Umlenkelement der wenigstens einen richtungsändernden Umlenkeinheit treffen.

Vorteilhafterweise sind die Abmessungen des Umlenkelements wenigstens eine verschiebenden Umlenkeinheit wenigstens so groß wie der Querschnitt der auf sie treffenden elektromagnetischen Signalstrahlen. Auf diese Weise Verluste beim Auftreffen der Signalstrahlen auf das Umlenkelement verringert.

Bei einer weiteren vorteilhaften Ausführungsform kann wenigstens eine Umlenkeinheit wenigstens ein die umzulenkenden elektromagnetischen Signalstrahlen wenigstens teilweise reflektierendes Umlenkelement aufweisen und/oder wenigstens eine Umlenkeinheit kann wenigstens ein die umzulenkenden elektromagnetischen Signalstrahlen wenigstens teilweise transmittierendes Umlenkelement aufweisen. Auf diese Weise kann das wenigstens eine Umlenkelement flexibler im Signalpfad der umzulenkenden elektromagnetischen Signale angeordnet werden. Dabei kann wenigstens ein Umlenkelement entweder reflektierend oder transmittierend sein. Alternativ kann wenigstens ein Umlenkelement sowohl teilweise reflektierend als auch teilweise transmittierend sein. Auf diese Weise kann die Signalumlenkeinrichtung flexibler ausgestaltet werden.

Vorteilhafterweise kann wenigstens ein Umlenkelement wenigstens ein Spiegelelement, wenigstens ein Fenster, insbesondere aus Glas, Kunststoff oder dergleichen, oder ein andersartiges reflektierendes und/oder transmittierendes Element aufweisen oder daraus bestehen. Derartige Elemente können einfach und platzsparend realisiert werden. Wenigstens ein Spiegelelement kann mit wenigstens einer reflektierenden Oberfläche insbesondere aus Metall oder dergleichen realisiert werden.

Bei einer weiteren vorteilhaften Ausführungsform kann wenigstens eine Umlenkeinheit bezüglich ihrer Umlenkwirkung in einer Dimension veränderbar sein und/oder wenigstens eine Umlenkeinheit kann bezüglich ihrer Umlenkwirkung in zwei Dimensionen veränderbar sein. Auf diese Weise kann die Signalumlenkeinrichtung flexibler an den Verwendungszweck der Detektionsvorrichtung angepasst werden, um die Signalstrahlen in einer räumlichen Dimension oder in zwei räumlichen Dimensionen durch den Überwachungsbereich zu bewegen.

Vorteilhafterweise kann der Überwachungsbereich im Falle einer eindimensionalen Umlenkung der Signalstrahlen in zwei Dimensionen, nämlich der Umlenkrichtung der Signalstrahlen und der Ausbreitungsrichtung der Signalstrahlen, abgetastet werden. Im Falle einer zweidimensionalen Umlenkung der Signalstrahlen kann der Überwachungsbereich in drei Dimensionen, nämlich den Umlenkungsrichtung in zwei Dimensionen und der Ausbreitungsrichtung, abgetastet werden.

Vorteilhafterweise können wenigstens zwei Umlenkeinheiten mit unterschiedlichen Umlenkwirkungen so kombiniert werden, dass mit einer der Umlenkeinheiten die Signalstrahlen in einer Dimension umlenkbar sind und mit einer anderen Umlenkeinheit die Signalstrahlen in zwei Dimensionen umlenkbar sind.

Alternativ oder zusätzlich können die Signalstrahlen mit zwei Umlenkeinheiten mit unterschiedlichen Umlenkwirkungen jeweils in einer Dimension, insbesondere in derselben Dimension, umlenkbar sein.

Alternativ können die Signalstrahlen mit zwei Umlenkeinheiten mit unterschiedlichen Umlenkwirkungen jeweils in zwei, insbesondere denselben Dimensionen oder unterschiedlichen Dimensionen, umlenkbar sein. Auf diese Weise kann die resultierende Umlenkwirkung der Signalumlenkeinrichtung weiter variiert werden. Die Dimensionen, in denen der Überwachungsbereich abgetastet wird, können auf die Umlenkeinheiten verteilt werden.

Bei einer weiteren vorteilhaften Ausführungsform kann wenigstens ein Aktor wenigstens einen elektrischen und/oder elektromechanischen Antrieb, insbesondere einen Motor, einen Piezo-Antrieb, einen Bimetall-Aktor oder dergleichen aufweisen oder daraus bestehen.

Elektrische Antriebe und elektromechanische Antriebe können mit elektrischen Steuersignalen, insbesondere mittels einer elektrischen Steuereinrichtung oder Steuer- und Auswerteeinrichtung, gesteuert werden.

Vorteilhafterweise kann die Signalumlenkeinrichtung gemeinsam mit anderen Einrichtungen der Detektionsvorrichtung, insbesondere wenigstens einer Sendeeinrichtung, wenigstens einer Empfangseinrichtung und/oder wenigstens einer anderen Signalumlenkeinrichtung, gesteuert werden.

Vorteilhafterweise kann die Steuerung wenigstens von Teilen der Signalumlenkeinrichtung, insbesondere die Steuerung von Aktoren der Umlenkeinheiten, und Steuerungen von anderen Einrichtungen der Detektionsvorrichtung, insbesondere wenigstens einer Sendeeinrichtung und/oder wenigstens einer Empfangseinrichtung, aufeinander abgestimmt, insbesondere synchronisiert, sein. Auf diese Weise kann ein Überwachungsbereich gezielter abgetastet werden. Aus dem Überwachungsbereich über die Signalstrahlen und entsprechende reflektierte Signalstrahlen gewonnene Informationen können so genauer zugeordnet werden.

Bei einer weiteren vorteilhaften Ausführungsform kann wenigstens ein Aktor eine Schrittsteuerung aufweisen oder mit einer solchen verbunden sein. Auf diese Weise können die entsprechenden Umlenkelemente bezüglich ihrer Umlenkwirkung präzise schrittweise eingestellt werden.

Vorteilhafterweise kann die Schrittsteuerung wenigstens zwei Steuerzustände aufweisen. Auf diese Weise kann mit dem wenigstens einen Aktor das wenigstens eine Umlenkelement zwischen zwei Umlenkwirkungen, insbesondere zwischen zwei Positionen, umgestellt werden.

Vorteilhafterweise kann mit wenigstens einem Aktor das wenigstens eine Umlenkelement schrittweise geschwenkt, gekippt und/oder gedreht werden. Auf diese Weise kann mit dem wenigstens einen Aktor die Umlenkwirkung schrittweise verändert werden.

Vorteilhafterweise kann wenigstens ein Aktor wenigstens einen Schrittmotor aufweisen oder daraus bestehen. Schrittmotoren können präzise gesteuert werden.

Bei einer weiteren vorteilhaften Ausführungsform können mehr als zwei verschiebende Umlenkeinheiten kaskadenartig hintereinander angeordnet sein. Auf diese Weise kann die Auflösung bei der Abtastung des wenigstens einen Überwachungsbereichs weiter verbessert werden.

Bei einer weiteren vorteilhaften Ausführungsform kann wenigstens ein Umlenkelement wenigstens einer Umlenkeinrichtung mit wenigstens einem Aktor schwenkbar, kippbar und/oder drehbar verbunden sein. Auf diese Weise kann das wenigstens eine Umlenkelement mit dem wenigstens einen Aktor entsprechend eingestellt werden.

Vorteilhafterweise kann wenigstens ein Umlenkelement wenigstens einen Schwenkspiegel, einen mikroelektromechanischen Schwenkspiegel (MEMS), ein Fenster eines Strahlverschiebers oder dergleichen aufweisen oder daraus bestehen. Derartige Umlenkelemente können einfach und/oder platzsparend realisiert werden. Ferner können derartige Umlenkelemente robust realisiert werden. Auf diese Weise kann die Detektionsvorrichtung auch unter rauen Bedingungen, beispielsweise in oder an einem Fahrzeug oder dergleichen, zuverlässig betrieben werden.

Bei einer weiteren vorteilhaften Ausführungsform kann die Signalumlenkeinrichtung wenigstens einer Sendeeinrichtung für elektromagnetische Signalstrahlen zugeordnet sein und/oder die Signalumlenkeinrichtung kann wenigstens einer Empfangseinrichtung für elektromagnetische Signalstrahlen zugeordnet sein. Auf diese Weise können die von der wenigstens einen Sendeeinrichtung und/oder die aus dem Überwachungsbereich kommenden reflektierten Signalstrahlen entsprechend umgelenkt werden.

Bei der Zuordnung zu wenigstens einer Sendeeinrichtung können mit der Signalumlenkeinrichtung die mit der wenigstens einen Sendeeinrichtung erzeugten Signalstrahlen umgelenkt und so der Überwachungsbereich mit den Signalstrahlen abgetastet werden.

Bei der Zuordnung zu wenigstens einer Empfangseinrichtung können die aus unterschiedlichen Richtungen aus dem Überwachungsbereich kommenden elektromagnetischen Signalstrahlen, insbesondere an Objekten reflektierte elektromagnetische Signalstrahlen, auf wenigstens einen Detektor der wenigstens einen Empfangseinrichtung gelenkt werden.

Vorteilhafterweise kann wenigstens eine Signaleinrichtung sowohl wenigstens einer Sendeeinrichtung als auch wenigstens einer Empfangseinrichtung zugeordnet sein. Auf diese Weise können mit nur einer Signalumlenkeinrichtung gesendete Signalstrahlen und aus dem Überwachungsbereich empfangene Signalstrahlen umgelenkt werden.

Ferner wird die Aufgabe erfindungsgemäß bei der Detektionsvorrichtung dadurch gelöst, dass wenigstens zwei Umlenkeinheiten, welche unterschiedliche Umlenkwirkungen aufweisen, hintereinander in einem Signalpfad der umzulenkenden elektromagnetischen Signalstrahlen angeordnet sind,
wobei wenigstens eine verschiebende Umlenkeinheit eine verschiebende Umlenkwirkung auf umzulenkende elektromagnetische Signalstrahlen und wenigstens eine richtungsändernde Umlenkeinheit eine richtungsändernde Umlenkwirkung auf umzulenkende elektromagnetische Signalstrahlen aufweist.

Vorteilhafterweise kann die Detektionsvorrichtung wenigstens eine Steuereinrichtung, insbesondere eine elektronische Steuereinrichtung, aufweisen. Mit der Steuereinrichtung können die Komponenten der Detektionsvorrichtung insbesondere auf elektronischem Wege gesteuert werden. So können die wenigstens eine Sendeeinrichtung, die wenigstens eine Empfangseinrichtung und die wenigstens eine Signalumlenkeinrichtung gezielter, insbesondere synchron, angesteuert werden.

Alternativ oder zusätzlich kann die wenigstens eine Detektionsvorrichtung wenigstens eine Auswerteeinrichtung aufweisen. Auf diese Weise können elektrische Empfangssignale, die mit der wenigstens einen Empfangseinrichtung aus elektromagnetischen Signalstrahlen ermittelt werden, ausgewertet werden.

Die Auswerteeinrichtung kann Mittel aufweisen, mit denen aus den elektrischen Empfangssignalen Positionsgrößen, insbesondere Entfernungsgrößen, Richtungsgröße und/oder Geschwindigkeitsgrößen, ermittelt werden, welche die Position von erfassen Objekten, insbesondere die Entfernung, die Richtung und/oder die Geschwindigkeit relativ zur Detektionsvorrichtung, charakterisieren können.

Vorteilhafterweise können Steuerfunktionen der Detektionsvorrichtung und Auswertefunktionen zur Auswertung von Signalstrahlen zentral, insbesondere mittels einer Steuer- und Auswerteeinrichtung, oder wenigstens teilweise dezentral mittels entsprechenden Steuermitteln und Auswertemitteln, insbesondere auf softwaretechnischem und/oder hardwaretechnischem Wege, realisiert werden.

Außerdem wird die Aufgabe erfindungsgemäß bei dem Fahrzeug dadurch gelöst, dass wenigstens zwei Umlenkeinheiten, welche unterschiedliche Umlenkwirkungen aufweisen, hintereinander in einem Signalpfad der umzulenkenden elektromagnetischen Signalstrahlen angeordnet sind,
wobei wenigstens eine verschiebende Umlenkeinheit eine verschiebende Umlenkwirkung auf umzulenkende elektromagnetische Signalstrahlen und wenigstens eine richtungsändernde Umlenkeinheit eine richtungsändernde Umlenkwirkung auf umzulenkende elektromagnetische Signalstrahlen aufweist.

Erfindungsgemäß weist das Fahrzeug wenigstens eine Detektionsvorrichtung auf, mit der ein Überwachungsbereich in der Umgebung des Fahrzeugs oder innerhalb des Fahrzeugs mit einer hohen Auflösung überwacht werden kann.

Vorteilhafterweise kann das Fahrzeug wenigstens ein Fahrassistenzsystem aufweisen. Mit dem Fahrerassistenzsystem kann das Fahrzeug autonom oder wenigstens teilweise autonom betrieben werden.

Vorteilhafterweise kann wenigstens eine Detektionsvorrichtung mit wenigstens einem Fahrerassistenzsystem des Fahrzeugs funktional verbunden sein. Auf diese Weise können Informationen über den Überwachungsbereich, insbesondere Entfernungsgrößen Richtungsgrößen und/oder Geschwindigkeitsgrößen, welche mit der wenigstens einen Detektionsvorrichtung ermittelt werden können, an das wenigstens eine Fahrerassistenzsystem übermittelt werden. Mit dem wenigstens einen Fahrerassistenzsystem kann das Fahrzeug unter Berücksichtigung der Information über den Überwachungsbereich autonom oder wenigstens teilweise autonom betrieben werden.

Des Weiteren wird die Aufgabe erfindungsgemäß bei dem Verfahren dadurch gelöst, dass die elektromagnetischen Signalstrahlen mit wenigstens zwei Umlenkeinrichtungen, welche in einem Signalpfad der umzulenkenden elektromagnetischen Signalstrahlen hintereinander angeordnet sind, unterschiedlich umgelenkt werden,
wobei mit wenigstens einer verschiebenden Umlenkeinheit die elektromagnetischen Signalstrahlen verschoben werden und mit einer richtungsändernden Umlenkeinheit die Ausbreitungsrichtungen der elektromagnetischen Signalstrahlen verändert werden.

Auf diese Weise kann die Auflösung beim Abtasten wenigstens eines Überwachungsbereichs mittels der Signalstrahlen verbessert werden.

Bei einer vorteilhaften Ausgestaltung des Verfahrens kann die Steuerung wenigstens einer Signalumlenkeinrichtung an die Steuerung wenigstens einer Sendeeinrichtung der Detektionsvorrichtung und/oder an die Steuerung wenigstens einer Empfangseinrichtung der Detektionsvorrichtung angepasst werden. Auf diese Weise kann der wenigstens eine Überwachungsbereich gezielter abgetastet werden. Ferner können die aus dem Überwachungsbereich gewonnenen Informationen auf Basis der reflektierten Steuerstrahlen genauer ausgewertet werden.

Vorteilhafterweise können die Steuerungen wenigstens einer Signalumlenkeinrichtung, wenigstens einer Sendeeinrichtung und/oder wenigstens einer Empfangseinrichtung synchronisiert werden. Auf diese Weise kann die Genauigkeit der Detektionsvorrichtung weiter verbessert werden.

Im Übrigen gelten die im Zusammenhang mit der erfindungsgemäßen Signalumlenkeinrichtung, der erfindungsgemäßen Detektionsvorrichtung, dem erfindungsgemäßen Fahrzeug und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: ein Fahrzeug in der Vorderansicht mit einem Fahrerassistenzsystem und einem LiDAR-System zur Erfassung von Objekten in Fahrtrichtung vor dem Fahrzeug;
- Figur 2: eine Funktionsdarstellung des Fahrzeugs mit dem Fahrerassistenzsystem und dem LiDAR-System aus der Figur 1;
- Figur 3: eine Signalumlenkeinrichtung gemäß einem ersten Ausführungsbeispiel zur Verwendung in dem LiDAR-System aus den Figuren 1 und 2, mit einem Strahlverschieber und einer Umlenkspiegeleinheit mit einem schwenkbar angetriebenen Umlenkspiegel;
- Figur 4: eine Vorderansicht eines Strahlverschiebers der Signalumlenkeinrichtung aus der Figur 3;
- Figur 5: eine Seitenansicht eines Fensters des Strahlverschiebers aus der Figur 4 in zwei beispielhaften Kipppositionen;
- Figur 6: im Querschnitt den mit dem Strahlverschieber aus den Figuren 4 und 5 verschobenen Laser-Signalstrahl in zwei Verschiebepositionen, die bei den zwei Kipppositionen des Fensters aus der Figur 5 realisiert werden;
- Figur 7: im Querschnitt den mit dem Strahlverschieber aus den Figuren 4 und 5 verschobenen Laser-Signalstrahl in vier Verschiebepositionen, welche durch Kippen des Fensters der Strahlverschiebers in zwei Dimensionen realisiert werden;
- Figur 8: eine isometrische Darstellung einer Signalumlenkeinrichtung gemäß einem zweiten Ausführungsbeispiel und einer Sendeeinrichtung zur Verwendung in dem LiDAR-System aus den Figuren 1 und 2, welche den Strahlverschieber aus den Figuren 4 und 5 und eine Umlenkspiegeleinheit mit rotierend angetriebenen Umlenkspiegeln aufweist;
- Figur 9: eine isometrische Darstellung einer Signalumlenkeinrichtung gemäß einem dritten Ausführungsbeispiel und einer Sendeeinrichtung zur Verwendung in dem LiDAR-System aus den Figuren 1 und 2, welche den Strahlverschieber aus den Figuren 4 und 5 und zwei Umlenkspiegeleinheiten mit Umlenkspiegeln aufweist, die mit Galvanometern angetrieben sind;
- Figur 10: eine Signalumlenkeinrichtung gemäß einem vierten Ausführungsbeispiel und eine Sendeeinrichtung zur Verwendung in dem LiDAR-System aus den Figuren 1 und 2, welche zwei kaskadenartig hintereinander angeordnete Strahlverschieber aus den Figuren 4 und 5 und eine Umlenkspiegeleinheit mit einem schwenkbar angetriebenen Umlenkspiegel aufweist.

In den Figuren sind gleiche Bauteile mit gleichen Bezugszeichen versehen.

### Ausführungsform(en) der Erfindung

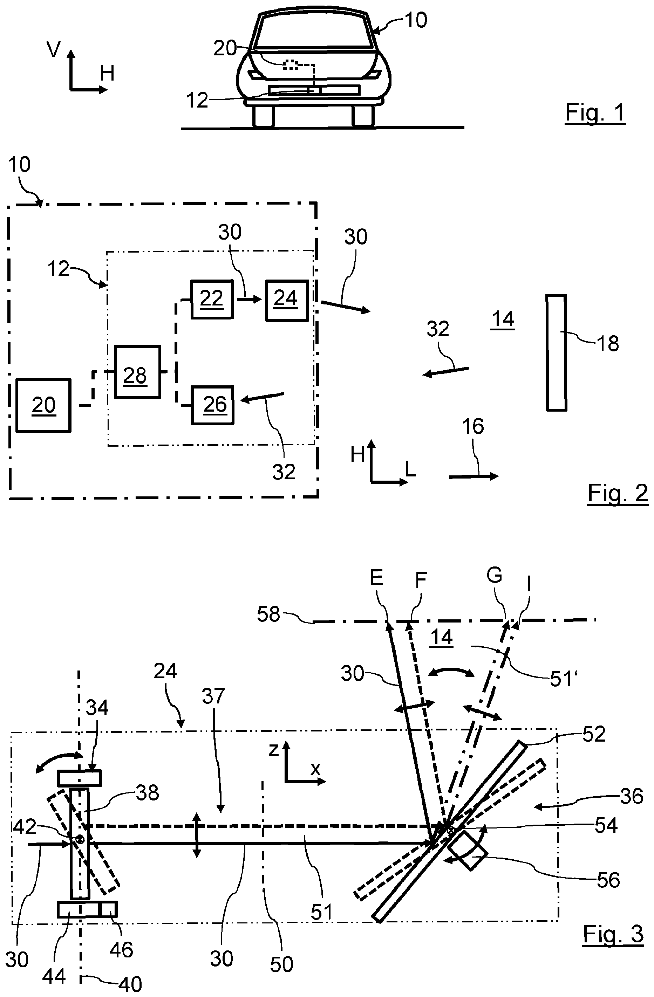

In der Figur 1 ist ein Fahrzeug 10 beispielhaft in Form eines Personenkraftwagens in der Vorderansicht gezeigt.

Das Fahrzeug 10 verfügt über eine Detektionsvorrichtung beispielhaft in Form eines LiDAR-Systems 12, das als Laserscanner ausgestaltet ist. In Figur 2 ist eine Funktionsdarstellung eines Teils des Fahrzeugs 10 mit dem LiDAR-System 12 gezeigt.

Das LiDAR-System 12 ist beispielhaft in der vorderen Stoßstange des Fahrzeugs 10 angeordnet. Mit dem LiDAR-System 12 kann ein Überwachungsbereich 14 in Fahrtrichtung 16 vor dem Fahrzeug 10 auf Objekte 18 hin überwacht werden. Das LiDAR-System 12 kann auch an anderer Stelle am Fahrzeug 10 angeordnet und anders ausgerichtet sein. Mit dem LiDAR-System 12 können Objektinformationen, beispielsweise Entfernungen, Richtungen und Geschwindigkeiten von Objekten 18 relativ zum Fahrzeug 10, respektive zum LiDAR-System 12, ermittelt werden.

Der besseren Orientierung wegen sind in den Figuren 1, 2, 8 und 9 die entsprechenden Koordinatenachsen eines kartesischen äußeren V-H-L-Koordinatensystems eingezeichnet. Bei den gezeigten Ausführungsbeispielen erstreckt sich die L-Achse parallel zu einer Fahrzeuglängsachse des Fahrzeugs 10, die H-Achse erstreckt sich parallel zur einer Fahrzeugquerachse und die V-Achse erstreckt sich senkrecht zur Ebene mit der H-Achse und der L-Achse nach räumlich oben. Wenn das Fahrzeug 10 sich betriebsgemäß auf einer horizontalen Fahrbahn befindet, erstrecken sich die H-Achse und die L-Achse räumlich horizontal. Die V-Achse erstreckt sich räumlich vertikal.

Bei den Objekten 18 kann es sich um stehende oder bewegte Objekte, beispielsweise um andere Fahrzeuge, Personen, Tiere, Pflanzen, Hindernisse, Fahrbahnunebenheiten, beispielsweise Schlaglöcher oder Steine, Fahrbahnbegrenzungen, Verkehrszeichen, Freiräume, Beispielweise Parklücken, Niederschlag oder dergleichen handeln.

Das LiDAR-System 12 ist mit einem Fahrerassistenzsystem 20 verbunden. Mit dem Fahrerassistenzsystem 20 kann das Fahrzeug 10 autonom oder teilautonom betrieben werden.

Das LiDAR-System 12 umfasst beispielhaft eine Sendeeinrichtung 22, eine Signalumlenkeinrichtung 24, eine Empfangseinrichtung 26 und eine Steuer- und Auswerteeinrichtung 28.

Die Funktionen der Steuer- und Auswerteeinrichtung 28 können zentral oder dezentral realisiert sein. Teile der Funktionen der Steuer- und Auswerteeinrichtung 28 können auch in die Sendeeinrichtung 22 oder die Empfangseinrichtung 26 integriert sein. Die Funktionen der Steuer- und Auswerteeinrichtung 28 sind auf softwaremäßigem und hardwaremäßigem Wege realisiert.

Mit der Steuer- und Auswerteeinrichtung 28 können elektrische Sendesignale erzeugt werden. Die Sendeeinrichtung 22 kann mit den elektrischen Sendesignalen angesteuert werden, sodass diese entsprechende elektromagnetische Abtastsignalstrahlen 30 in Form von Licht-Signalstrahlen sendet. Die Sendeeinrichtung 22 kann als Lichtquelle beispielsweise einen oder mehrere Laser aufweisen. Bei den Abtastsignalstrahlen 30 handelt es sich beispielhaft um gepulste Laser-Signalstrahlen.

Die Abtastsignalstrahlen 30 werden mit der Sendeeinrichtung 22 zu der Signalumlenkeinrichtung 24 gesendet. Mit der Signalumlenkeinrichtung 24 werden die Abtastsignalstrahlen 30 in den Überwachungsbereich 14 gelenkt, wobei die Ausbreitungsrichtung der Abtastsignalstrahlen 30 zwischen Messungen verändert wird. So kann der Überwachungsbereich 14 mit den Abtastsignalstrahlen 30 abgetastet werden.

Die an einem Objekt 18 in Richtung der Empfangseinrichtung 26 als elektromagnetische Echo-Signalstrahlen 32 reflektierten elektromagnetischen Abtastsignalstrahlen 30 können mit der Empfangseinrichtung 26 empfangen werden.

Die Empfangseinrichtung 26 kann optional eine Echosignal-Umlenkeinrichtung aufweisen, mit der die elektromagnetischen Echo-Signalstrahlen 32 zu einem Empfänger der Empfangseinrichtung 26 gelenkt werden. Der Empfänger kann beispielsweise wenigstens einen Punktsensor, wenigstens Zeilensensor und/oder wenigstens einen Flächensensor, im Besonderen eine (Lawinen)fotodiode, eine Photodiodenzeile, einen CCD-Sensor, einen Active-Pixel-Sensor, beispielsweise einen CMOS-Sensor oder dergleichen, aufweisen oder daraus bestehen.

Mit dem Empfänger können die elektromagnetischen Echo-Signalstrahlen 32 in entsprechende elektrische Empfangssignale umgewandelt werden. Die elektrischen Empfangssignale können mit der Steuer- und Auswerteeinrichtung 28 verarbeitet werden. Beispielsweise können mit der Steuer- und Auswerteeinrichtung 28 aus den elektrischen Empfangssignalen Objektgrößen, beispielsweise Entfernungsgrößen, Richtungsgrößen und/oder Geschwindigkeitsgrößen, ermittelt werden, welche Entfernungen, Richtungen und/oder Geschwindigkeiten von erfassten Objekt 18 relativ zum LiDAR-System 12 oder relativ zum Fahrzeug 10 charakterisieren können. Die ermittelten Objektgrößen können mit der Steuer- und Auswerteeinrichtung 28 zu dem Fahrerassistenzsystem 20 übermittelt werden. Mit dem Fahrerassistenzsystem 20 kann unter anderem auf Basis der Objektgrößen das Fahrzeug 10 autonom oder teilweise autonom betrieben werden.

In der Figur 3 ist eine Signalumlenkeinrichtung 24 gemäß einem ersten Ausführungsbeispiel gezeigt.

Der besseren Orientierung wegen innerhalb der Signalumlenkeinrichtung 24 sind in den Figuren 3 und 4 bis 10 die entsprechenden Koordinatenachsen eines kartesischen inneren x-y-z-Koordinatensystems dargestellt. Bei den gezeigten Ausführungsbeispielen erstreckt sich die x-Achse parallel zur Ausbreitungsrichtung der Abtastsignalstrahlen 30 am Eingang der Signalumlenkeinrichtung 24.

Das innere x-y-z-Koordinatensystem bezieht sich auf die Anordnung innerhalb der Signalumlenkeinrichtung 24. Vereinzelte Achsen des inneren x-y-z-Koordinatensystems können parallel oder koaxial zu den Achsen des eingangs erwähnten äußeren V-H-L-Koordinatensystems verlaufen. Die Achsen des x-y-z-Koordinatensystems können auch in anderer Orientierung beispielsweise schräg zu einzelnen oder allen Achsen des V-H-L-Koordinatensystems verlaufen.

Die Signalumlenkeinrichtung 24 umfasst zwei Umlenkeinheiten, nämlich einen Strahlverschieber 34 und eine Umlenkspiegeleinheit 36. Der Strahlverschieber 34 und die Umlenkspiegeleinheit 36 sind in einem Signalpfad 37 der abzulenkenden Abtastsignalstrahlen 30 hintereinander angeordnet. Der Strahlverschieber 34 kann auch als "Beam Shifter" bezeichnet werden.

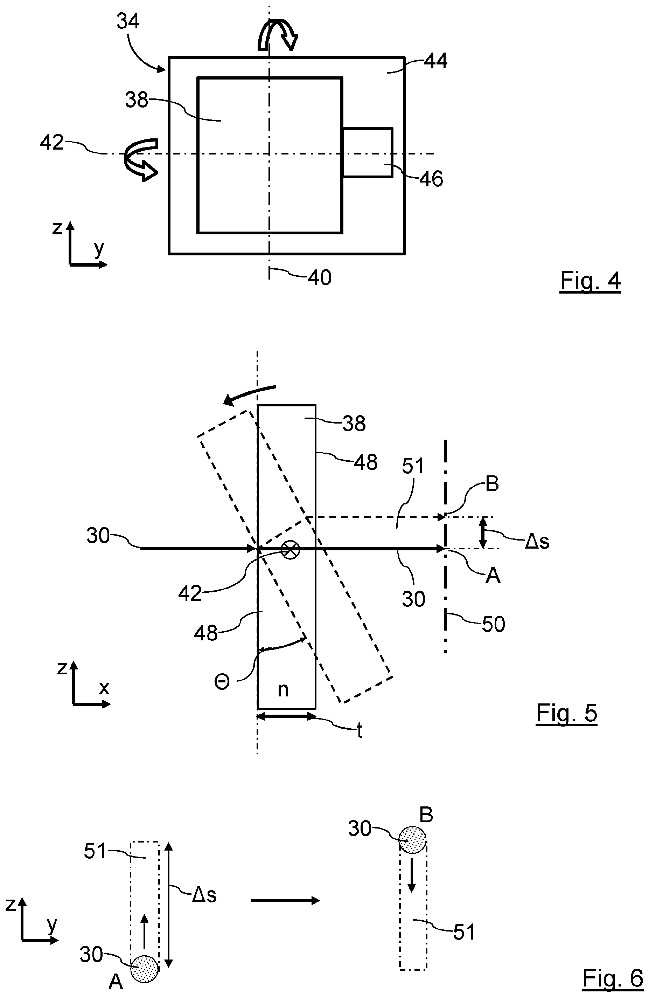

In der Figur 4 ist der Strahlverschieber 34 in der Vorderansicht mit Betrachtungsrichtung auf seine der Sendeeinrichtung 22 abgewandten Seite gezeigt. Der Strahlverschieber 34 umfasst ein bezüglich seiner Umlenkwirkung auf elektromagnetische Abtastsignalstrahlen 30 veränderbares Umlenkelement in Form eines Fensters 38. Das Fenster 38 besteht aus einem für die Abtastsignalstrahlen 30 durchlässigen Material, beispielsweise Glas oder Kunststoff. Das Fenster 38 ist transmittierend in dem Signalpfad 37 angeordnet. Das Fenster 38 verfügt über zwei zueinander parallele ebene Flächen 48, welche von dem Signalpfad 37 gekreuzt werden.

Das Fenster 38 ist beispielhaft um eine erste Strahlverschieberachse 40 und eine zweite Strahlverschieberachse 42 kippbar in einem Rahmen 44 angeordnet. Die erste Strahlverschieberachse 40 und die zweite Strahlverschieberachse 42 verlaufen senkrecht zueinander. Beispielhaft erstreckt sich die erste Strahlverschieberachse 40 parallel zur z-Achse. Die zweite Strahlverschieberachse 42 erstreckt sich parallel zur y-Achse. In einer beispielhaften Neutralstellung des Fensters 38, welche in den Figuren 3 und 5 mit durchgängigen Linien gezeigt ist, erstrecken sich die Flächen 48 jeweils senkrecht zu der Ausbreitungsrichtung der auftreffenden Abtastsignalstrahlen 30.

Ferner weist der Strahlverschieber 34 einen Aktor, beispielsweise in Form eines elektrischen Antriebs 46, auf. Mit dem Antrieb 46 kann das Fenster 38 in dem Rahmen 44 gekippt werden. Der Antriebsmotor 46 ist beispielhaft mit der Steuer- und Auswerteinrichtung 28 steuerbar verbunden.

Die Umlenkwirkung des Strahlverschiebers 34 auf einen Abtastsignalstrahlen 30 wird im Folgenden beispielhaft unter Zuhilfenahme der Figuren 5 bis 7 erläutert.

Die Flächen 48 des Fensters 38 werden von dem Abtastsignalstrahl 30 durchleuchtet. In der Neutralstellung des Fensters 38 trifft der Abtastsignalstrahl 30 senkrecht auf die Flächen 48. Die Ausbreitungsrichtung des Abtastsignalstrahls 30 wird in der Neutralstellung des Fensters 38 nicht verändert. Der Abtastsignalstrahl 30 durchquert das Fenster 38 auf geradem Wege. Der Abtastsignalstrahl 30 trifft eine gedachte innere Abbildungsebene 50 in einen Durchstrahlbereich A.

Die innere Abbildungsebene 50 ist eine gedachte Ebene innerhalb der Signalumlenkeinrichtung 24 und wird deshalb mit "innere" bezeichnet. Die innere Abbildungsebene 50 verläuft beispielhaft senkrecht zur ursprünglichen Ausbreitungsrichtung der elektromagnetischen Abtastsignalstrahlen 30. Beispielhaft erstreckt sich die innere Abbildungsebene 50 parallel zur y-z-Ebene.

Durch Kippen des Fensters 38 beispielhaft um einen Kippwinkel Θ um die zweite Strahlverschieberachse 42 wird der Abtastsignalstrahl 30 um eine Verschiebung Δs parallel verschoben. Der in dem gezeigten Ausführungsbeispiel nach oben verschobene Abtastsignalstrahl 30 trifft die innere Abbildungsebene 50 in einem Durchstrahlbereich B. Das um den Kippwinkel Θ gekippte Fenster 38 und der umgelenkte Abtastsignalstrahlen 30 sind in den Figuren 3 und 5 jeweils gestrichelt gezeigt.

Die Verschiebung Δs ist abhängig von dem Kippwinkel Θ, der Dicke t des Fensters 38 und dem Brechungsindex n des Fensters 38 wie folgt: $Δs = t sin Θ \left(1-\sqrt{\frac{1 - {sin}^{2} Θ}{{n}^{2} - {sin}^{2} Θ}}\right)$

Bei einem eindimensionalen Betrieb des Strahlverschiebers 34 wird das Fenster 38 lediglich um eine der Strahlverschieberachsen, beispielsweise um die erste Strahlverschieberachse 42, gekippt. Dabei wird der Abtastsignalstrahl 30 in einer Dimension verschoben.

In der Figur 6 sind die Durchstrahlbereiche A und B in Betrachtungsrichtung entgegen der x-Achse also senkrecht zur Ausdehnung der inneren Abbildungsebene 50 gezeigt. Figur 6 zeigt links die Position des Abtastsignalstrahls 30 in dem Durchstrahlbereich A in der Neutralstellung des Fensters 38 und rechts die Position des Abtastsignalstrahls 30 in dem Durchstrahlbereich B bei in einer Dimension gekipptem Fenster 38.

Durch das Kippen des Fensters 38 wird der Abtastsignalstrahl 30 innerhalb eines gedachten dreidimensionalen Strahlverlaufsfeldes 51 bewegt. Der Querschnitt des Strahlverlaufsfeldes 51 hängt von der maximalen Verschiebung Δs, welche durch kippen des Fensters 38 erreichbar ist, ab. Durch die Parallelverschiebung bei dem Kippen des Fensters 38 wird erreicht, dass das Strahlverlaufsfeld 51 in Richtung der x-Achse einen konstanten Querschnitt aufweist. Der Querschnitt des Strahlverlaufsfeldes 51 ist unabhängig von einem Abstand zu dem Fenster 38.

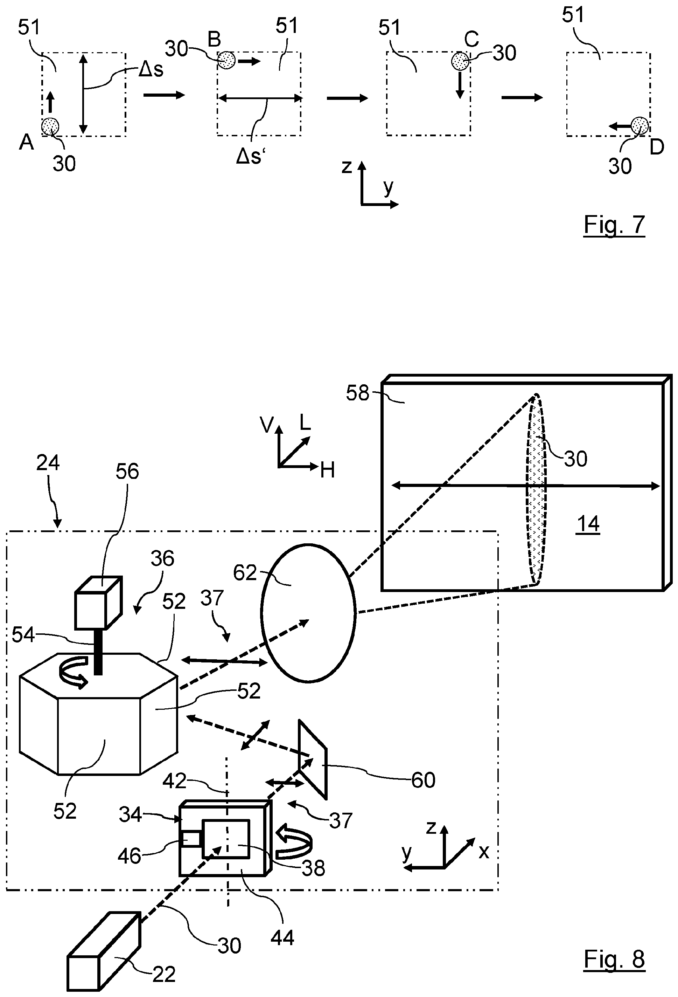

Bei einem zweidimensionalen Betrieb des Strahlverschiebers 34 wird das Fenster 38 um beide Strahlverschieberachsen 42 und 42, also in zwei Dimensionen, gekippt. In der Figur 7 sind beispielhaft die vier Positionen des Abtastsignalstrahls 30 mit den entsprechenden Durchstrahlbereichen A, B, C und D mit Betrachtungsrichtung senkrecht auf die innere Abbildungsebene 50 gezeigt.

Für die der Figur 7 links gezeigten Position des Abtastsignalstrahls 30 wird das Fenster 38 in seine Neutralstellung gestellt. Der Abtastsignalstrahl 30 trifft in dem Durchstrahlbereich A auf die innere Abbildungsebene 50. Durch Kippen des Fensters 38 um die zweite Strahlverschiebungsachse 42 um den Kippwinkel Θ wird der Abtastsignalstrahl 30 wie beim eindimensionalen Betrieb entsprechend der Figur 6 in einer Ebene parallel zur x-z-Ebene um die Verschiebung Δs parallel verschoben. Der Abtastsignal 30 trifft, wie in der Figur 7 in der zweiten Darstellung von links gezeigt, in dem Durchstrahlbereich B auf die innere Abbildungsebene 50.

Anschließend wird der Strahlverschieber 34 um die zweite Strahlverschieberachse 40 um einen zweiten Kippwinkel Θ' geschwenkt. Der Abtastsignalstrahl 30 wird um eine Verschiebung Δs' in einer Ebene parallel zur x-y-Ebene parallel verschoben. Der Abtastsignalstrahl 30 trifft, wie in der Figur 7 in der dritten Darstellung von links gezeigt, in einem Durchstrahlbereich C auf die innere Abbildungsebene 50.

Dann wird das Fenster 38 um die erste Strahlverschiebungsachse 42 um den ersten Kippwinkel Θ zurück geschwenkt. Der Abtastsignalstrahl 30 wird parallel zur x-z-Ebene um die Verschiebung Δs parallel verschoben und trifft, wie in der Figur 7 in der vierten Darstellung gezeigt, in einem Durchstrahlbereich D auf die innere Abbildungsebene 50.

Schließlich wird das Fenster 38 um die zweite Strahlverschiebungsachse 40 um den zweiten Kippwinkel θ' in seine Neutralstellung zurückgeschwenkt. Der Abtastsignalstrahl 30 wird dabei zur x-y-Ebene parallel verschoben, sodass der Abtastsignalstrahlen 30 wieder in dem Durchstrahlbereich A auf die Abbildungsebene 50 treffen.

Insgesamt wird beim zweidimensionalen Betrieb des Strahlverschiebers 34 der Abtastsignalstrahl 30 in dem Strahlverlaufsfeld 51 in zwei Dimensionen, beispielhaft parallel zur x-Achse und parallel zur z-Achse, geschwenkt.

Bei einem nicht gezeigten Ausführungsbeispiel können für jede Dimension zusätzliche Unterteilungen von Kippwinkel Θ beziehungsweise Θ' vorgesehen sein. Auf diese Weise wird die Anzahl der Verschiebepositionen, die der Abtastsignalstrahl 30 in dem Strahlverlaufsfeld 51 annehmen kann, erhöht. So wird die Auflösung bei der Umlenkung des Abtastsignalstrahls 30 vergrößert.

Die Umlenkspiegeleinheit 36 der in der Figur 3 gezeigten Signalumlenkeinrichtung 24 umfasst erfindungsgemäß ein Umlenkelement in Form eines Umlenkspiegels 52. Der Umlenkspiegel 52 ist reflektierend im Signalpfad 37 der Abtastsignalstrahlen 30 angeordnet. Der Umlenkspiegel 52 ist um eine Spiegeldrehachse 54 schwenkbar. Die Spiegeldrehachse 54 verläuft beispielhaft parallel zur zweiten Strahlverschiebeachse 42 und parallel zur y-Achse.

Der Umlenkspiegel 52 ist mit einem Aktor 56 beispielsweise in Form eines Schrittmotors antreibbar verbunden. Der Aktor 56 ist mit der Steuer- und Auswerteeinrichtung 28 steuerbar verbunden.

In der Figur 3 ist der Umlenkspiegel 52 beispielhaft in zwei Schwenkpositionen gestrichelt und mit durchgängigen Linien gezeigt. Durch Ändern der Schwenkposition des Umlenkspiegels 52 wird die Ausbreitungsrichtung der von dem Strahlverschieber 34 kommenden und auf den Umlenkspiegel 52 treffenden Abtastsignalstrahlen 30 in einer Schwenkebene, welche beispielhaft parallel zur x-z-Ebene verläuft, geschwenkt.

Durch die Änderung der Ausbreitungsrichtung der Abtastsignalstrahlen 30 mit der Umlenkspiegeleinheit 36 wird ein Strahlverlaufsfeld 51' im Überwachungsbereich 14 abgetastet. Ein Querschnitt des Strahlverlaufsfeldes 51' nimmt mit dem Abstand zu der Signalumlenkeinrichtung 24, respektive zu der Umlenkspiegeleinheit 36, zu.

Abhängig von dem Bereich, in dem Abtastsignalstrahlen 30 auf den Umlenkspiegel 52 treffen, und der Schwenkposition des Schwenkspiegels 42 werden die Abtastsignalstrahlen 30 auf entsprechende Durchstrahlbereiche E, F, G, I in einer äußeren äußere Abbildungsebene 58 gelenkt.

Ein Bereich, in dem Abtastsignalstrahlen 30 auf den Umlenkspiegel 52 treffen, wird durch die Kippstellung des Fensters 38 des Strahlverschiebers 34 vorgegeben. Dieser Bereich befindet sich innerhalb des Strahlverlaufsfeldes 51 der Strahlverschiebers 34.

Die äußere Abbildungsebene 58 befindet sich außerhalb der Signalumlenkeinrichtung 24 und wird der besseren Unterscheidbarkeit wegen mit "äußere" bezeichnet.

Für jede der beispielhaft zwei Schwenkposition des Schwenkspiegels 52 werden durch entsprechendes oben beschriebenes Kippen des Fensters 38 des Strahlverschiebers 34 zwei Durchstrahlbereiche E und F beziehungsweise G und E auf der äußeren Abbildungsebene 58 getroffen.

Der Durchstrahlbereich E wird dabei in der Neutralposition des Fensters 38 und einer mit durchgängiger Linie gezeigten ersten Schwenkposition des Umlenkspiegels 52 getroffen. Der Durchstrahlbereich F wird in der Kippposition des Fensters 38 in dem Kippwinkel Θ um die zweite Strahlverschieberachse 42 und der ersten Schwenkposition des Umlenkspiegels 52 getroffen. Der Durchstrahlbereich G wird in der Neutralposition des Fensters 38 und der mit gestrichelter Linie gezeigten zweiten Position des Umlenkspiegels 52 getroffen. Der Durchstrahlbereich I wird in der Kippposition des Fensters 38 in dem Kippwinkel Θ um die zweite Strahlverschieberachse 42 und der zweiten Schwenkposition des Umlenkspiegels 52 getroffen.

So wird insgesamt die Auflösung beim Abtasten des Überwachungsbereichs 14 durch Verwendung des Strahlverschiebers 34 gegenüber einer Signalumlenkeinrichtung 24, welche lediglich die Umlenkspiegeleinheit 36 aufweist, entsprechend verdoppelt.

Beim Betrieb der Signalumlenkeinrichtung 24 kann beispielhaft zunächst der Umlenkspiegel 52 auf seine erste Schwenkposition eingestellt werden. Dann können nacheinander die beiden beispielhaften Kipppositionen des Fensters 38 eingestellt werden, sodass nacheinander der Abtastsignalstrahl 30 beispielsweise durch die zwei Durchstrahlbereiche E und F verläuft. Anschließend kann der Umlenkspiegel 52 auf seine zweite Schwenkposition eingestellt werden. Nacheinander können die beiden Kippposition des Fensters 38 eingestellt werden, sodass nacheinander der Abtastsignalstrahls 30 die zwei anderen Durchstrahlbereiche G und I verläuft.

Auf diese Weise kann mit der Umlenkspiegeleinheit 36 eine Grobeinstellung für die Auflösung beim Abtasten des Überwachungsbereichs 14 und mit dem Strahlverschieber 34 eine Feineinstellung realisiert werden. So können durch Verschieben des Abtastsignalstrahls 30 mit dem Strahlverschieber 34 Lücken bei der Abtastung, welche durch das schrittweise Schwenken des Umlenkspiegels 52 entstehen, verkleinert werden.

Durch entsprechendes Kippen des Fensters 38 und/oder schwenken des Schwenkspiegels 52 um zwei jeweilige insbesondere orthogonale Achsen kann der Überwachungsbereich 14 mit entsprechender Auflösung wahlweise in einer Dimension oder zwei Dimensionen abgetastet werden.

In der Figur 8 ist die Signalumlenkeinrichtung 24 gemäß einem zweiten Ausführungsbeispiel mit der Sendeeinrichtung 22 eines LiDAR-Systems 12 gezeigt. Diejenigen Elemente, die zu denen des ersten Ausführungsbeispiels aus den Figuren 3 bis 7 ähnlich sind, sind mit denselben Bezugszeichen versehen. Das zweite Ausführungsbeispiel unterscheidet sich von dem ersten Ausführungsbeispiel dadurch, dass die Signalumlenkeinrichtung 24 gemäß dem zweiten Ausführungsbeispiel eine rotierende Umlenkspiegeleinheit 36 aufweist. Die rotierende Umlenkspiegeleinheit 36 weist einen Spiegelkörper in Form eines sechseckigen Prismas auf, an dessen bezüglich einer Spiegeldrehachse 54 umfangsmäßige Außenseiten insgesamt sechs erfindungsgemäße Umlenkspiegel 52 angeordnet sind. Der rotierende Spiegelkörper 52 mit den Umlenkspiegeln 52 ist erfindungsgemäß mithilfe eines Aktors 56 in Form eines Schrittmotors um die Spiegeldrehachse 54 drehbar angetrieben. Ferner ist im Signalpfad 37 zwischen dem Strahlverschieber 34 und der Umlenkspiegeleinheit 36 ein fester Umlenkspiegel 60 vorgesehen. Mit dem Umlenkspiegel 60 werden die von dem Strahlverschieber 34 kommenden Abtastsignalstrahlen 30 auf den Umlenkspiegel 52 der Umlenkspiegeleinheit 36 umgelenkt, welcher dem Umlenkspiegel 60 zugewandt ist.

Außerdem ist im Signalpfad 37 hinter der Umlenkspiegeleinheit 36 eine optische Linse 62 vorgesehen, mit der die umgelenkten Abtastsignalstrahlen 30 in einer Dimension, beispielhaft parallel zur V-Achse, aufgeweitet werden können.

Mit der Signalumlenkeinrichtung 24 werden die Abtastsignalstrahlen 30 im Überwachungsbereich 14 beispielhaft parallel zur H-Achse hin und her geschwenkt. Dabei wird analog zu der Signalumlenkeinrichtung 24 gemäß dem ersten Ausführungsbeispiel mit dem Strahlverschieber 34 eine Verschiebung der Abtastsignalstrahlen 30 und mit der Umlenkspiegeleinheit 36 eine Änderung der Ausbreitungsrichtung der Abtastsignalstrahlen 30 erreicht.

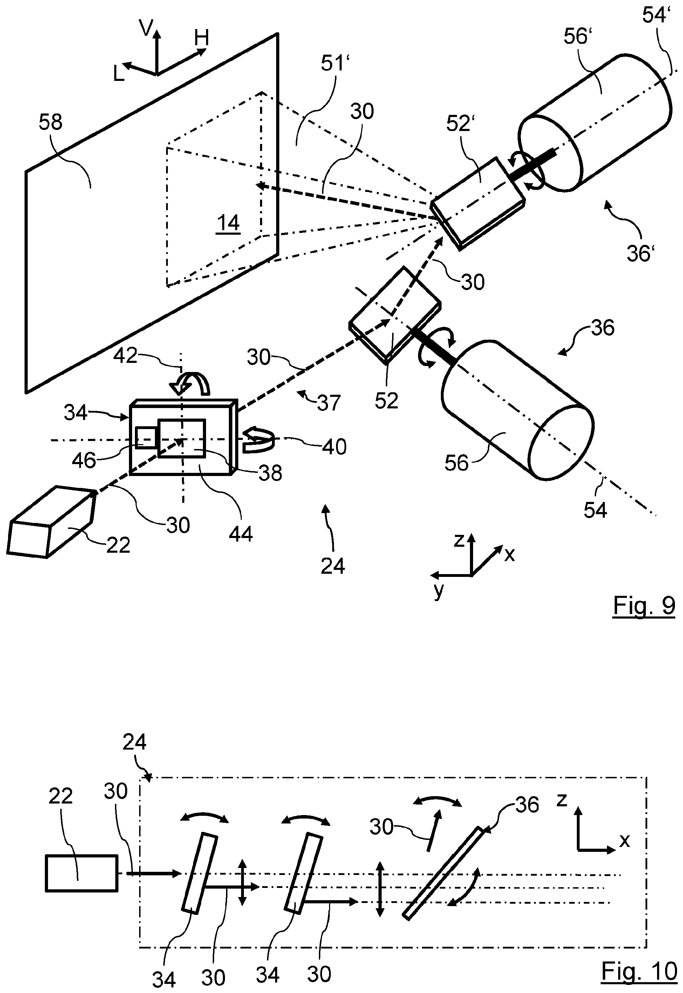

In der Figur 9 ist eine Signalumlenkeinrichtung 24 gemäß einem dritten Ausführungsbeispiel mit der Sendeeinrichtung 22 eines LiDAR-Systems 12 gezeigt. Diejenigen Elemente, die zu denen des ersten Ausführungsbeispiels aus den Figuren 3 bis 7 ähnlich sind, sind mit denselben Bezugszeichen versehen. Das dritte Ausführungsbeispiel unterscheidet sich von dem ersten Ausführungsbeispiel dadurch, dass die Signalumlenkeinrichtung 24 gemäß dem dritten Ausführungsbeispiel zwei Umlenkspiegeleinheiten 36 und 36' aufweist.

Jede Umlenkspiegeleinheit 36 und 36' umfasst erfindungsgemäß einen Umlenkspiegel 52 als Umlenkelement und einen Aktor 56 in Form eines Galvanometers. Die Umlenkspiegel 52 sind um eine jeweilige Spiegeldrehachse 54 beziehungsweise 54' mit dem entsprechenden Aktor 56 hin und her schwenkbar angetrieben.

Die Umlenkspiegel 52 der beiden Umlenkspiegeleinheiten 36 und 36' sind im Signalpfad 37 hintereinander so angeordnet, dass die Abtastsignalstrahlen 30 mit jeder Umlenkspiegeleinheit 36 und 36' jeweils in einer Dimension, insgesamt in zwei Dimensionen, geschwenkt werden können. Die Spiegeldrehachsen 54 und 54' der beiden Umlenkspiegeleinheiten 36 und 36' beispielhaft senkrecht zueinander angeordnet. Insgesamt kann so der Überwachungsbereich 14 innerhalb eines Strahlverlaufsfeldes 51' in zwei Dimensionen, beispielhaft in Richtung der H-Achse und in Richtung der V-Achse, abgetastet werden.

In der Figur 10 ist eine Signalumlenkeinrichtung 24 gemäß einem vierten Ausführungsbeispiel mit der Sendeeinrichtung 22 eines LiDAR-Systems 12 gezeigt. Diejenigen Elemente, die zu denen des ersten Ausführungsbeispiels aus den Figuren 3 bis 7 ähnlich sind, sind mit denselben Bezugszeichen versehen. Das dritte Ausführungsbeispiel unterscheidet sich von dem ersten Ausführungsbeispiel dadurch, dass beim zweiten Ausführungsbeispiel zwei Strahlverschieber 34 jeweils in Transmission hintereinander kaskadenartig in dem Signalpfad 37 der Abtastsignalstrahlen 30 angeordnet sind. Mit den beiden Strahlverschiebern 34 werden die Abtastsignalstrahlen 30 jeweils entsprechend parallel verschoben. Auf diese Weise kann die Auflösung bei der Umlenkung der Abtastsignalstrahlen 30 weiter vergrößert werden.

## Patentansprüche

1. Signalumlenkeinrichtung (24) zur Umlenkung von elektromagnetischen Signalstrahlen (30) einer Detektionsvorrichtung (12) zur Abtastung wenigstens eines Überwachungsbereichs (14) mittels elektromagnetischen Signalstrahlen (30),
mit wenigstens einer Umlenkeinheit (34, 36), welche wenigstens ein bezüglich seiner Umlenkwirkung auf elektromagnetische Signalstrahlen (30) veränderbares Umlenkelement (38, 52) und wenigstens einen Aktor (46, 56) zum Verändern des wenigstens einen Umlenkelements (38, 52) bezüglich seiner Umlenkwirkung aufweist,
wobei wenigstens zwei Umlenkeinheiten (34, 36), welche unterschiedliche Umlenkwirkungen aufweisen, hintereinander in einem Signalpfad (37) der umzulenkenden elektromagnetischen Signalstrahlen (30) angeordnet sind,
und wobei wenigstens eine verschiebende Umlenkeinheit (34) eine verschiebende Umlenkwirkung auf umzulenkende elektromagnetische Signalstrahlen (30) und wenigstens eine richtungsändernde Umlenkeinheit (36) eine richtungsändernde Umlenkwirkung auf umzulenkende elektromagnetische Signalstrahlen (30) aufweist,
**dadurch gekennzeichnet, dass**
die richtungsändernde Umlenkeinheit (36) wenigstens einen Umlenkspiegel (52) umfasst, der mittels eines Aktuators (56) um eine Spiegeldrehachse (54, 54') schwenkbar ist.

2. Signalumlenkeinrichtung nach Anspruch 1, **dadurch gekennzeichnet, dass** wenigstens eine verschiebende Umlenkeinheit (34) keine richtungsändernde Umlenkwirkung aufweist.

3. Signalumlenkeinrichtung nach Anspruch 1 oder 2, **dadurch gekennzeichnet, dass** wenigstens eine verschiebende Umlenkeinheit (34) wenigstens einen Strahlverschieber aufweist oder daraus besteht.

4. Signalumlenkeinrichtung nach einem der vorigen Ansprüche, **dadurch gekennzeichnet, dass** wenigstens eine verschiebende Umlenkeinheit (34) in einem Signalpfad (37) der umzulenkenden elektromagnetischen Signalstrahlen (30) vor wenigstens einer richtungsändernden Umlenkeinheit (36) angeordnet ist.

5. Signalumlenkeinrichtung nach einem der vorigen Ansprüche, **dadurch gekennzeichnet, dass** wenigstens eine Umlenkeinheit (34, 36) wenigstens ein die umzulenkenden elektromagnetischen Signalstrahlen (30) wenigstens teilweise reflektierendes Umlenkelement (52) aufweist und/oder wenigstens eine Umlenkeinheit (34, 36) wenigstens ein die umzulenkenden elektromagnetischen Signalstrahlen (30) wenigstens teilweise transmittierendes Umlenkelement (38) aufweist.

6. Signalumlenkeinrichtung nach einem der vorigen Ansprüche, **dadurch gekennzeichnet, dass** wenigstens eine Umlenkeinheit (34, 36) bezüglich ihrer Umlenkwirkung in einer Dimension veränderbar ist und/oder wenigstens eine Umlenkeinheit (34, 36) bezüglich ihrer Umlenkwirkung in zwei Dimensionen veränderbar ist.

7. Signalumlenkeinrichtung nach einem der vorigen Ansprüche, **dadurch gekennzeichnet, dass** wenigstens ein Aktor (46, 56) wenigstens einen elektrischen und/oder elektromechanischen Antrieb, insbesondere einen Motor, einen Piezo-Antrieb, einen Bimetall-Aktor aufweist oder daraus besteht.

8. Signalumlenkeinrichtung nach einem der vorigen Ansprüche, **dadurch gekennzeichnet, dass** wenigstens ein Aktor (56) eine Schrittsteuerung aufweist oder mit einer solchen verbunden ist.

9. Signalumlenkeinrichtung nach einem der vorigen Ansprüche, **dadurch gekennzeichnet, dass** mehr als zwei verschiebende Umlenkeinheiten (34) kaskadenartig hintereinander angeordnet sind.

10. Signalumlenkeinrichtung nach einem der vorigen Ansprüche, **dadurch gekennzeichnet, dass** wenigstens ein Umlenkelement (38, 52) wenigstens einer Umlenkeinrichtung mit wenigstens einem Aktor (46, 56) schwenkbar, kippbar und/oder drehbar verbunden ist.

11. Signalumlenkeinrichtung nach einem der vorigen Ansprüche, **dadurch gekennzeichnet, dass** die Signalumlenkeinrichtung (24) wenigstens einer Sendeeinrichtung (22) für elektromagnetische Signalstrahlen (30) zugeordnet ist und/oder die Signalumlenkeinrichtung (24) wenigstens einer Empfangseinrichtung (26) für elektromagnetische Signalstrahlen (30) zugeordnet ist.

12. Detektionsvorrichtung (12) zur Überwachung wenigstens eines Überwachungsbereichs (14) mittels elektromagnetischer Signalstrahlen (30),
mit wenigstens einer Sendeeinrichtung (22) zur Erzeugung von elektromagnetischen Signalstrahlen (30),
mit wenigstens einer Empfangseinrichtung (26) zum Empfangen von elektromagnetischen Signalstrahlen (30) und zur Umwandlung von empfangenen elektromagnetischen Signalstrahlen (30) in elektrische Empfangssignale,
und mit wenigstens einer Signalumlenkeinrichtung (24) nach Anspruch 1.

13. Fahrzeug (10) mit wenigstens einer Detektionsvorrichtung (12) nach Anspruch 12.

14. Verfahren zum Betreiben einer Signalumlenkeinrichtung (24) zur Umlenkung von elektromagnetischen Signalstrahlen (30) einer Detektionsvorrichtung (12) zur Überwachung wenigstens eines Überwachungsbereichs (14) mittels elektromagnetischer Signalstrahlen (30), bei dem mit wenigstens einem Aktor (46, 56) wenigstens ein Umlenkelement (38, 52) bezüglich seiner Umlenkwirkung auf elektromagnetische Signalstrahlen (30) zur Abtastung des wenigstens einen Überwachungsbereichs (14) verändert wird,
**dadurch gekennzeichnet, dass**
die elektromagnetischen Signalstrahlen (30) mit wenigstens zwei Umlenkeinrichtungen, welche in einem Signalpfad (37) der umzulenkenden elektromagnetischen Signalstrahlen (30) hintereinander angeordnet sind, unterschiedlich umgelenkt werden,
wobei mit wenigstens einer verschiebenden Umlenkeinheit (34, 36) die elektromagnetischen Signalstrahlen (30) verschoben werden und mit einer richtungsändernden Umlenkeinheit (36) die Ausbreitungsrichtungen der elektromagnetischen Signalstrahlen (30) verändert werden, wobei zur Änderung der Ausbreitungsrichtungen wenigstens ein Umlenkspiegel (52) der richtungsändernde Umlenkeinheit (36) mittels eines Aktuators (56) um eine Spiegeldrehachse (54, 54') geschwenkt wird.

15. Verfahren nach Anspruch 14, **dadurch gekennzeichnet, dass** die Steuerung wenigstens einer Signalumlenkeinrichtung (24) an die Steuerung wenigstens einer Sendeeinrichtung (22) der Detektionsvorrichtung (12) und/oder an die Steuerung wenigstens einer Empfangseinrichtung (26) der Detektionsvorrichtung (12) angepasst wird.

## Claims

1. Signal deflection device (24) for deflecting electromagnetic signal beams (30) of a detection device (12) for scanning at least one monitoring area (14) by means of electromagnetic signal beams (30), having at least one deflection unit (34, 36) which has at least one deflection element (38, 52) that is variable with respect to its deflection effect on electromagnetic signal beams (30) and at least one actuator (46, 56) for varying the at least one deflection element (38, 52) with respect to its deflection effect, wherein at least two deflection units (34, 36) having different deflection effects are arranged one behind the other in a signal path (37) of the electromagnetic signal beams (30) to be deflected, and wherein at least one shifting deflection unit (34) has a shifting deflection effect on electromagnetic signal beams (30) to be deflected and at least one direction-changing deflection unit (36) has a direction-changing deflection effect on electromagnetic signal beams (30) to be deflected, **characterized in that** the direction-changing deflection unit (36) comprises at least one deflection mirror (52) which is pivotable about a mirror rotation axis (54, 54') by means of an actuator (56).

2. Signal deflection device according to claim 1, **characterized in that** at least one shifting deflection unit (34) has no direction-changing deflection effect.

3. Signal deflection device according to claim 1 or 2, **characterized in that** at least one shifting deflection unit (34) comprises or consists of at least one beam shifter.

4. Signal deflection device according to any of the preceding claims, **characterized in that** at least one shifting deflection unit (34) is arranged in a signal path (37) of the electromagnetic signal beams (30) to be deflected upstream of at least one direction-changing deflection unit (36).

5. Signal deflection device according to any of the preceding claims, **characterized in that** at least one deflection unit (34, 36) has at least one deflection element (52) that at least partially reflects the electromagnetic signal beams (30) to be deflected and/or at least one deflection unit (34, 36) has at least one deflection element (38) that at least partially transmits the electromagnetic signal beams (30) to be deflected.

6. Signal deflection device according to any of the preceding claims, **characterized in that** at least one deflection unit (34, 36) is variable with respect to its deflection effect in one dimension and/or at least one deflection unit (34, 36) is variable with respect to its deflection effect in two dimensions.

7. Signal deflection device according to any of the preceding claims, **characterized in that** at least one actuator (46, 56) comprises or consists of at least one electrical and/or electromechanical drive, in particular a motor, a piezo drive, a bimetallic actuator.

8. Signal deflection device according to any of the preceding claims, **characterized in that** at least one actuator (56) has a step control or is connected to such a control.

9. Signal deflection device according to any of the preceding claims, **characterized in that** more than two shifting deflection units (34) are arranged in cascade one behind the other.

10. Signal deflection device according to any of the preceding claims, **characterized in that** at least one deflection element (38, 52) of at least one deflection device is connected in a pivotable, tiltable and/or rotatable manner to at least one actuator (46, 56).

11. Signal deflection device according to any of the preceding claims, **characterized in that** the signal deflection device (24) is associated with at least one transmitting device (22) for electromagnetic signal beams (30) and/or the signal deflection device (24) is associated with at least one receiving device (26) for electromagnetic signal beams (30).

12. Detection device (12) for monitoring at least one monitoring area (14) by means of electromagnetic signal beams (30), having at least one transmitting device (22) for generating electromagnetic signal beams (30), having at least one receiving device (26) for receiving electromagnetic signal beams (30) and for converting received electromagnetic signal beams (30) into electrical received signals, and having at least one signal deflection device (24) according to claim 1.

13. Vehicle (10) having at least one detection device (12) according to claim 12.

14. Method for operating a signal deflection device (24) for deflecting electromagnetic signal beams (30) of a detection device (12) for monitoring at least one monitoring area (14) by means of electromagnetic signal beams (30), in which at least one deflection element (38, 52) is varied by means of at least one actuator (46, 56) with respect to its deflection effect on electromagnetic signal beams (30) for scanning the at least one monitoring area (14), **characterized in that** the electromagnetic signal beams (30) are deflected differently by means of at least two deflection devices arranged one behind the other in a signal path (37) of the electromagnetic signal beams (30) to be deflected, wherein the electromagnetic signal beams (30) are shifted by means of at least one shifting deflection unit (34, 36) and the propagation directions of the electromagnetic signal beams (30) are changed by means of a direction-changing deflection unit (36), wherein to change the propagation directions, at least one deflection mirror (52) of the direction-changing deflection unit (36) is pivoted about a mirror rotation axis (54, 54') by means of an actuator (56).

15. Method according to claim 14, **characterized in that** the control of at least one signal deflection device (24) is adapted to the control of at least one transmitting device (22) of the detection device (12) and/or to the control of at least one receiving device (26) of the detection device (12).

## Revendications

1. Dispositif de déviation de signal (24) pour la déviation de faisceaux de signaux électromagnétiques (30) d'un dispositif de détection (12) pour le balayage d'au moins une zone de surveillance (14) au moyen de faisceaux de signaux électromagnétiques (30), comprenant au moins une unité de déviation (34, 36) qui présente au moins un élément de déviation (38, 52) modifiable quant à son effet de déviation sur les faisceaux de signaux électromagnétiques (30) et au moins un actionneur (46, 56) pour modifier ledit au moins un élément de déviation (38, 52) quant à son effet de déviation, dans lequel au moins deux unités de déviation (34, 36) présentant des effets de déviation différents sont disposées en série dans un chemin de signal (37) des faisceaux de signaux électromagnétiques (30) à dévier, et dans lequel au moins une unité de déviation par déplacement (34) présente un effet de déviation par déplacement sur les faisceaux de signaux électromagnétiques (30) à dévier et au moins une unité de déviation par changement de direction (36) présente un effet de déviation par changement de direction sur les faisceaux de signaux électromagnétiques (30) à dévier, **caractérisé en ce que** l'unité de déviation par changement de direction (36) comprend au moins un miroir de déviation (52) qui est pivotable au moyen d'un actionneur (56) autour d'un axe de rotation de miroir (54, 54').

2. Dispositif de déviation de signal selon la revendication 1, **caractérisé en ce qu'**au moins une unité de déviation par déplacement (34) ne présente pas d'effet de déviation par changement de direction.

3. Dispositif de déviation de signal selon la revendication 1 ou 2, **caractérisé en ce qu'**au moins une unité de déviation par déplacement (34) comprend ou est constituée d'au moins un déviateur de faisceau.

4. Dispositif de déviation de signal selon l'une des revendications précédentes, **caractérisé en ce qu'**au moins une unité de déviation par déplacement (34) est disposée dans un chemin de signal (37) des faisceaux de signaux électromagnétiques (30) à dévier en amont d'au moins une unité de déviation par changement de direction (36).

5. Dispositif de déviation de signal selon l'une des revendications précédentes, **caractérisé en ce qu'**au moins une unité de déviation (34, 36) présente au moins un élément de déviation (52) réfléchissant au moins partiellement les faisceaux de signaux électromagnétiques (30) à dévier et/ou au moins une unité de déviation (34, 36) présente au moins un élément de déviation (38) transmettant au moins partiellement les faisceaux de signaux électromagnétiques (30) à dévier.

6. Dispositif de déviation de signal selon l'une des revendications précédentes, **caractérisé en ce qu'**au moins une unité de déviation (34, 36) est modifiable quant à son effet de déviation dans une dimension et/ou au moins une unité de déviation (34, 36) est modifiable quant à son effet de déviation dans deux dimensions.

7. Dispositif de déviation de signal selon l'une des revendications précédentes, **caractérisé en ce qu'**au moins un actionneur (46, 56) comprend ou est constitué d'au moins un entraînement électrique et/ou électromécanique, notamment un moteur, un entraînement piézoélectrique, un actionneur bimétallique.

8. Dispositif de déviation de signal selon l'une des revendications précédentes, **caractérisé en ce qu'**au moins un actionneur (56) comprend une commande pas à pas ou est connecté à une telle commande.

9. Dispositif de déviation de signal selon l'une des revendications précédentes, **caractérisé en ce que** plus de deux unités de déviation par déplacement (34) sont disposées en série en cascade.

10. Dispositif de déviation de signal selon l'une des revendications précédentes, **caractérisé en ce qu'**au moins un élément de déviation (38, 52) d'au moins un dispositif de déviation est connecté de manière pivotante, basculante et/ou rotative à au moins un actionneur (46, 56).

11. Dispositif de déviation de signal selon l'une des revendications précédentes, **caractérisé en ce que** le dispositif de déviation de signal (24) est associé à au moins un dispositif d'émission (22) pour les faisceaux de signaux électromagnétiques (30) et/ou le dispositif de déviation de signal (24) est associé à au moins un dispositif de réception (26) pour les faisceaux de signaux électromagnétiques (30).

12. Dispositif de détection (12) pour la surveillance d'au moins une zone de surveillance (14) au moyen de faisceaux de signaux électromagnétiques (30), comprenant au moins un dispositif d'émission (22) pour la génération de faisceaux de signaux électromagnétiques (30), au moins un dispositif de réception (26) pour la réception de faisceaux de signaux électromagnétiques (30) et pour la conversion de faisceaux de signaux électromagnétiques (30) reçus en signaux de réception électriques, et au moins un dispositif de déviation de signal (24) selon la revendication 1.

13. Véhicule (10) comprenant au moins un dispositif de détection (12) selon la revendication 12.

14. Procédé pour faire fonctionner un dispositif de déviation de signal (24) pour la déviation de faisceaux de signaux électromagnétiques (30) d'un dispositif de détection (12) pour la surveillance d'au moins une zone de surveillance (14) au moyen de faisceaux de signaux électromagnétiques (30), dans lequel au moins un élément de déviation (38, 52) est modifié quant à son effet de déviation sur les faisceaux de signaux électromagnétiques (30) au moyen d'au moins un actionneur (46, 56) pour le balayage de ladite au moins une zone de surveillance (14), **caractérisé en ce que** les faisceaux de signaux électromagnétiques (30) sont déviés différemment au moyen d'au moins deux dispositifs de déviation disposés en série dans un chemin de signal (37) des faisceaux de signaux électromagnétiques (30) à dévier, dans lequel les faisceaux de signaux électromagnétiques (30) sont déplacés au moyen d'au moins une unité de déviation par déplacement (34, 36) et les directions de propagation des faisceaux de signaux électromagnétiques (30) sont modifiées au moyen d'une unité de déviation par changement de direction (36), dans lequel, pour modifier les directions de propagation, au moins un miroir de déviation (52) de l'unité de déviation par changement de direction (36) est pivoté au moyen d'un actionneur (56) autour d'un axe de rotation de miroir (54, 54').

15. Procédé selon la revendication 14, **caractérisé en ce que** la commande d'au moins un dispositif de déviation de signal (24) est adaptée à la commande d'au moins un dispositif d'émission (22) du dispositif de détection (12) et/ou à la commande d'au moins un dispositif de réception (26) du dispositif de détection (12).
